# EUROPEAN PATENT APPLICATION

(11) **EP 4 826 557 A1**
(43) Date of publication of application: **21.10.2026**
(21) Application number: 26169542.3
(22) Date of filing: 31.03.2026
(51) Int. Cl.: G06F 13/40, G06F 13/42

(54) **ELECTRONIC DEVICE AND RESTORATION METHOD**

(30) Priority: 14.04.2025 JP 2025066372
(71) Applicant: Schneider Electric Japan Holdings Ltd., Tokyo 108-0023 (JP)
(72) Inventor: KOZONO, Shinichiro, Osaka, 5410041 (JP); FUJITA, Hiroaki, Osaka, 5410041 (JP); FUJISAKI, Masataka, Osaka, 5410041 (JP)
(74) Representative: Openshaw & Co.

(57) **Abstract**

To restore USB communication between a host controller and a device controller even in a case where a failure occurs in the device controller. In an electronic device (1), a USB device controller (10) outputs a link signal indicating an establishment state of USB communication with a USB host controller (40), a reset circuit (20) outputs a request signal requesting that the USB device controller (10) reboot in a case where the reset circuit (20) determines, on the basis of the link signal, that the USB communication is interrupted, and the USB device controller (10) reboots in a case where the USB device controller (10) detects the request signal.

## Description

### Technical Field

The present invention relates to an electronic device and a restoration method.

### Background Art

At, for example, a manufacturing site of a factory, a computer device establishes communication with various electronic devices and plays an important role in a system. In recent years, the computer device may be equipped with a USB host controller and perform USB communication with an electronic device equipped with a USB device controller via a USB cable. However, a USB communication error often occurs between the computer device and the electronic device.

For example, Patent Literature 1 discloses a technique for resolving such a state of the USB communication error. Specifically, in the technique disclosed in Patent Literature 1, USB communication is performed between a host device equipped with a USB host controller and an electronic device equipped with a USB device controller. In a case where a USB communication error occurs between the host device and the electronic device, the electronic device causes the host device to execute a bus reset of the USB communication to resolve the USB communication error.

### Citation List

### [Patent Literature]

[Patent Literature 1]
Japanese Patent Application Publication Tokukai No. 2019-061402

### Summary of Invention

### Technical Problem

However, the technique disclosed in Patent Literature 1 is based on a premise that the USB device controller is operating normally. Therefore, there is a problem in that the USB communication error cannot be resolved in a case where a failure occurs in the USB device controller. Furthermore, in a case where a recognition failure of a USB device occurs at the time of system startup, packet transmission from the USB host controller to the USB device controller stops. For this reason, since this situation is not recognized as a USB communication error, interruption of the USB communication is not recognized. Thus, there also arises a problem in that the USB communication connection cannot be self-restored.

It is an object of an aspect of the present invention to restore USB communication between a host controller and a device controller even in a case where a failure occurs in the device controller.

### Solution to Problem

In order to solve the foregoing problem, an electronic device in accordance with an aspect of the present invention is an electronic device including: a device controller configured to establish USB communication with a host controller; and a reset circuit configured to output a request signal requesting that the device controller reboot, wherein the device controller outputs a link signal indicating an establishment state of the USB communication, the reset circuit outputs the request signal in a case where the reset circuit determines, on the basis of the link signal, that the USB communication is interrupted, and the device controller reboots in a case where the device controller detects the request signal.

Further, a restoration method in accordance with an aspect of the present invention is a method for restoring USB communication between a host controller and a device controller, the method including: a link signal outputting step in which the device controller outputs a link signal indicating an establishment state of the USB communication; a determination step of determining, on the basis of the link signal, whether the USB communication is interrupted; a request signal outputting step of, in a case where it is determined in the determination step that the USB communication is interrupted, outputting a request signal requesting that the device controller reboot; and a rebooting step of rebooting the device controller in a case where the device controller detects the request signal.

### Advantageous Effects of Invention

According to an aspect of the present invention, it is possible to restore USB communication between a host controller and a device controller even in a case where a failure occurs in the device controller.

### Brief Description of Drawings

Fig. 1 is a block diagram illustrating an example of configurations of an electronic device and a PC in accordance with Embodiment 1 of the present invention.
Fig. 2 is a circuit diagram illustrating an example of a configuration of a reset circuit included in the electronic device illustrated in Fig. 1.
Fig. 3 is a flowchart illustrating an example of a process executed by the reset circuit included in the electronic device illustrated in Fig. 1.
Fig. 4 is a flowchart illustrating an example of a process of step S4 illustrated in Fig. 3.
Fig. 5 is a block diagram illustrating an example of configurations of an electronic device and a PC in accordance with Embodiment 2 of the present invention.

### Description of Embodiments

### Embodiment 1

### (Configuration of electronic device 1)

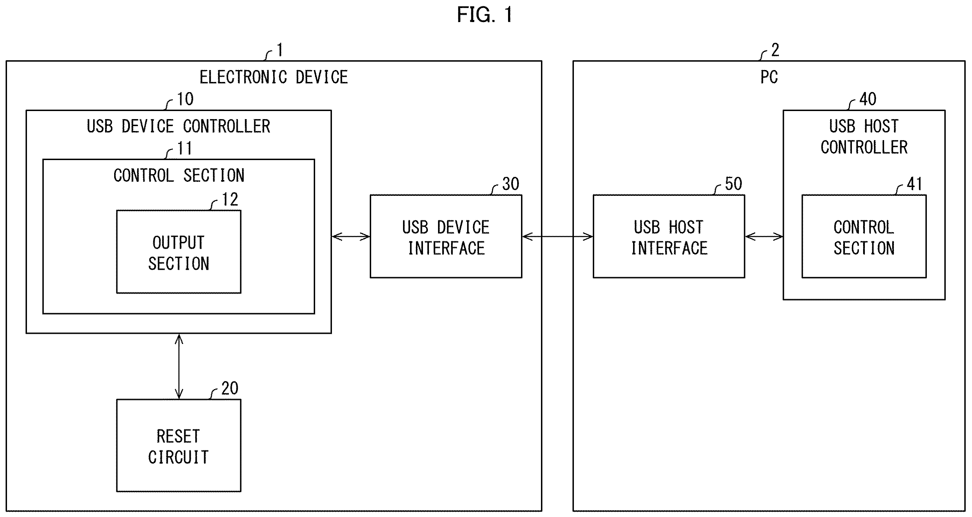

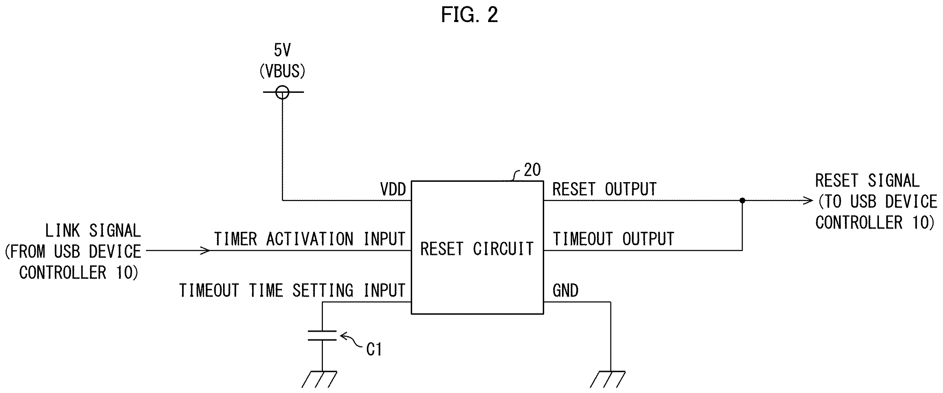

Fig. 1 is a block diagram illustrating an example of configurations of an electronic device 1 and a personal computer (PC) 2 in accordance with Embodiment 1 of the present invention. Fig. 2 is a circuit diagram illustrating an example of a configuration of a reset circuit 20 included in the electronic device 1 illustrated in Fig. 1. The following description will mainly discuss the electronic device 1 and the PC 2, but also serves as a description of a restoration method for restoring universal serial bus (USB) communication between a USB device controller 10 and a USB host controller 40.

The electronic device 1 is, for example, a USB device (device equipment) such as an audio output device that outputs audio, an IC card reader, or a USB memory, but is not limited thereto, and may be another type of USB device. As illustrated in Fig. 1, the electronic device 1 includes the USB device controller 10, the reset circuit 20, and a USB device interface 30.

The USB device controller 10 is an example of a device controller, and has a control section 11. The control section 11 is, for example, a processor such as a central processing unit (CPU). The control section 11 controls the electronic device 1 and includes an output section 12. The control section 11 establishes USB communication with the USB host controller 40 of the PC 2 with use of the USB device interface 30. In the present embodiment, "USB communication" refers to communication compliant with a USB standard between the USB device controller 10 and the USB host controller 40.

The output section 12 outputs a link signal indicating an establishment state of the USB communication to the reset circuit 20 (link signal outputting step). Here, the establishment state of the USB communication is a state of either establishment or interruption of the USB communication. In this case, the output section 12 continues output of the link signal indicating the establishment of the USB communication while the USB communication is established. On the other hand, the output section 12 continues output of the link signal indicating the interruption of the USB communication while the USB communication is interrupted.

The output section 12 is a control block of the control section 11. A function of the output section 12 may be realized, for example, by the control section 11 executing a program stored in a storage section such as a memory (not illustrated) included in the USB device controller 10. Note that the function of the output section 12 may be realized by a logic circuit. In this case, the control section 11 may be the logic circuit.

The reset circuit 20 is a circuit that outputs a reset signal requesting that the USB device controller 10 reboot. The reset signal is an example of a request signal. Further, the reset circuit 20 is, as an example, a circuit having a watchdog timer (WDT) function, and is, for example, a reset IC.

Note that the reset circuit 20 only needs to have a timer function and the function of resetting performed when a voltage is no longer applied, and may be, for example, a voltage supervisor or a voltage monitoring circuit having these functions. As illustrated in Fig. 2, the reset circuit 20 has a VDD terminal, a timer activation input terminal, a timeout time setting input terminal, a reset output terminal, a timeout output terminal, and a GND terminal.

A voltage of 5 V is applied from the PC 2 to the VDD terminal via the USB device interface 30. Here, the USB device interface 30 is connected to a USB host interface 50 via VBUS, which is a power line for supplying power from the PC 2 to the electronic device 1.

Power supply from the PC 2 to the VDD terminal is continued in either a state where the USB communication is connected or a state where the USB communication is interrupted. Note that the electronic device 1 may include a power source separately from a power source of the PC 2, and a voltage of 5 V may be supplied from the USB device controller 10 to the VDD terminal. Furthermore, the electronic device 1 may include a power source, and supply power to the PC 2. The reset circuit 20 may activate the WDT function of the reset circuit 20 after a third predetermined time from a time point when a voltage has been applied to the VDD terminal.

The link signal outputted from the output section 12 of the USB device controller 10 is inputted to the timer activation input terminal. The timeout time setting input terminal is connected to the ground via a capacitor C1. The reset output terminal and the timeout output terminal are connected to the USB device controller 10 via, for example, an unillustrated AND circuit (which is a wired AND circuit to which an unillustrated pull-up resistor is connected in a case where the reset output terminal and the timeout output terminal are open drain/open collector outputs). The GND terminal is connected to the ground.

The reset output terminal and the timeout output terminal are connected to two respective inputs of the AND circuit, and an output of the AND circuit is connected to the USB device controller 10. A signal outputted from the reset output terminal becomes a low level in a case where the voltage of the VDD terminal is less than a reference value, and becomes a high level in a case where the voltage of the VDD terminal is equal to or greater than the reference value. A signal outputted from the timeout output terminal is at a low level or a high level.

When the signal outputted from the timeout output terminal changes from the high level to the low level, a low-level signal is outputted from the timeout output terminal to the AND circuit. At this time, a low-level signal is outputted from the AND circuit to the USB device controller 10, and this signal serves as the reset signal. The AND circuit may be included in the reset circuit 20.

The USB device interface 30 is a USB interface, and is a communication interface that enables communication of the USB device controller 10 with the USB host controller 40. The USB device interface 30 is connected to the USB host interface 50 via, for example, a USB cable (not illustrated). Thereby, the USB device interface 30 and the USB host interface 50 are connected by a plurality of signal lines (communication lines) including VBUS, D+, D-, and GND.

### (Configuration of PC 2)

The PC 2 is an example of a computer device. The PC 2 may be any computer device including the USB host controller 40. Furthermore, the electronic device 1 may be connected to a computer device, e.g., a human machine interface (HMI) device, a smartphone, or a tablet, instead of the PC 2.

The PC 2 includes the USB host controller 40 and the USB host interface 50. The USB host controller 40 is an example of a host controller, and has a control section 41. The control section 41 is, for example, a processor such as a CPU, and controls the PC 2. The PC 2 may include a host controller instead of the USB host controller 40. In this case, the host controller is not limited to one used for USB communication, but is also used for other applications.

The control section 41 establishes USB communication with the USB device controller 10 of the electronic device 1 with use of the USB host interface 50. Specifically, in order for the USB host controller 40 to establish USB communication with the USB device controller 10, a request (for example, a packet) is transmitted from the USB host controller 40 to the USB device controller 10. Then, the USB device controller 10 responds to this request (for example, returns a packet), so that the USB communication is established. The USB host interface 50 is a USB interface, and is a communication interface that enables communication of the USB host controller 40 with the USB device controller 10.

### (Process of electronic device 1)

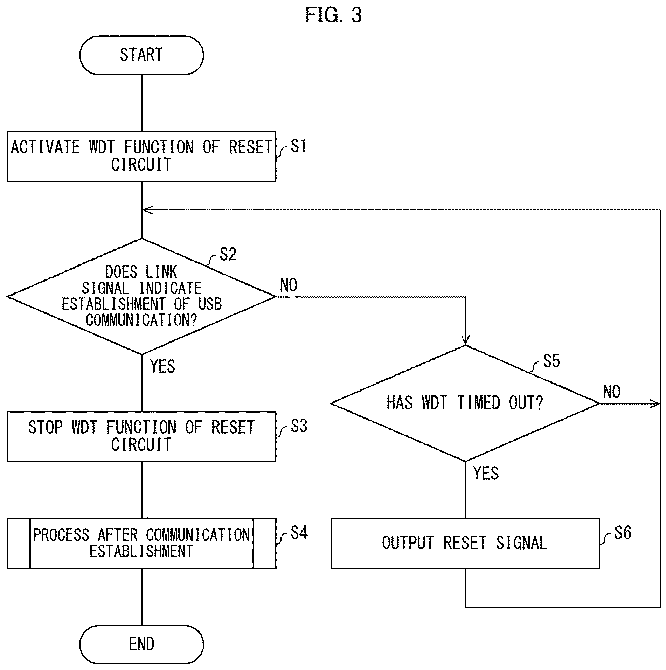

Fig. 3 is a flowchart illustrating an example of a process executed by the reset circuit 20 included in the electronic device 1 illustrated in Fig. 1. The following will discuss either a case where the PC 2 is started with the electronic device 1 connected to the PC 2, or a case where the electronic device 1 is connected to the PC 2 in operation. In either one of these cases, power is supplied from the PC 2 to the electronic device 1, and as illustrated in Fig. 3, the reset circuit 20 activates the WDT function of the reset circuit 20 (S1). After the reset circuit 20 activates the WDT function, the reset circuit 20 determines whether the link signal outputted from the output section 12 indicates the establishment of the USB communication (S2).

In a case where the reset circuit 20 determines that the link signal indicates the interruption of the USB communication (NO in S2), the reset circuit 20 determines whether the WDT has timed out (S5). Specifically, the reset circuit 20 determines whether a predetermined period has elapsed from a time point when the reset circuit 20 has determined that the link signal indicates the interruption of the USB communication.

The predetermined period is a timeout time set in the WDT function of the reset circuit 20. The timeout time can be adjusted by a capacitance of the capacitor C1 connected to the timeout time setting input terminal. Furthermore, the timeout time is set to be longer than a time constant (time from when a condition has been satisfied until the reset signal is outputted) of the reset circuit 20.

Here, a case where the signal outputted from the reset output terminal changes from the high level to the low level because the voltage of the VDD terminal becomes less than the reference value will be discussed. In this case, the time constant of the reset circuit 20 is a time from a time point when the voltage of the VDD terminal has become equal to or higher than the reference value until the signal outputted from the reset output terminal changes from the low level to the high level.

In a case where the reset circuit 20 determines that the WDT has timed out (YES in S5), the reset circuit 20 outputs the reset signal (S6: request signal outputting step). Specifically, in a case where the reset circuit 20 determines that the predetermined period has elapsed from the time point when the reset circuit 20 has determined that the link signal indicates the interruption of the USB communication, the reset circuit 20 determines that the USB communication is interrupted.

Then, the reset circuit 20 outputs the reset signal to the USB device controller 10. In this way, in a case where the reset circuit 20 determines that the USB communication is interrupted on the basis of the link signal, the reset circuit 20 outputs the reset signal. After the reset circuit 20 has outputted the reset signal, the process of the reset circuit 20 proceeds to step S2. In a case where the USB device controller 10 detects the reset signal outputted from the reset circuit 20, the USB device controller 10 reboots (rebooting step).

On the other hand, in a case where the reset circuit 20 determines that the WDT has not timed out (NO in S5), the process of the reset circuit 20 proceeds to step S2. Specifically, in a case where the reset circuit 20 determines that the predetermined period has not elapsed from the time point when the reset circuit 20 has determined that the link signal indicates the interruption of the USB communication, the process of the reset circuit 20 proceeds to step S2.

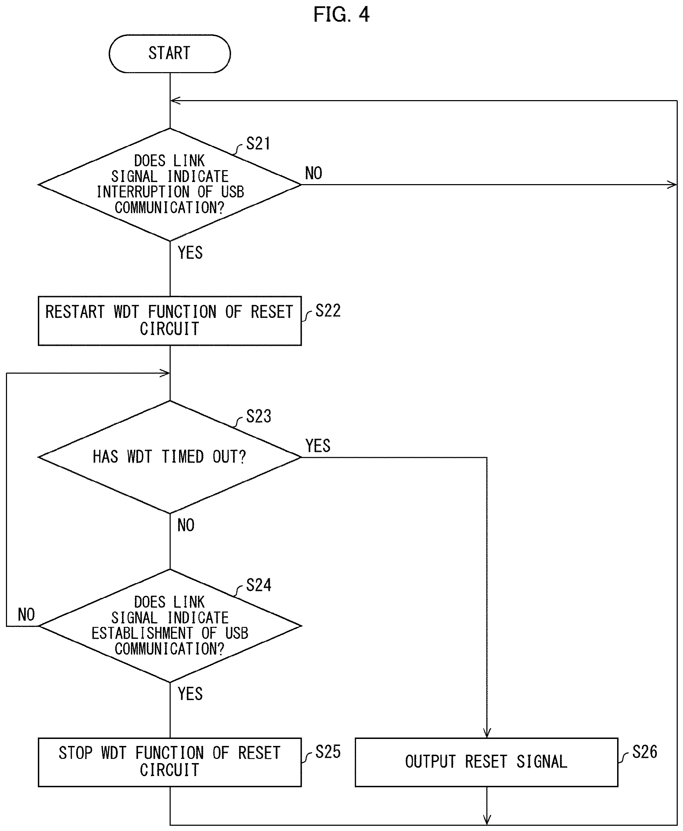

In a case where the reset circuit 20 determines that the link signal indicates the establishment of the USB communication (YES in S2), the reset circuit 20 stops the WDT function of the reset circuit 20 (S3). At this time, the reset circuit 20 determines that the USB communication is established. After stopping the WDT function of the reset circuit 20, the reset circuit 20 executes a process illustrated in Fig. 4 as a process performed after communication between the PC 2 and the electronic device 1 has been established (S4).

### (Process performed after communication between PC 2 and electronic device 1 is established)

Fig. 4 is a flowchart illustrating an example of a process of step S4 illustrated in Fig. 3. As illustrated in Fig. 4, the reset circuit 20 determines whether the link signal outputted from the output section 12 indicates the interruption of the USB communication (S21). In a case where the reset circuit 20 determines that the link signal indicates the establishment of the USB communication (NO in S21), the reset circuit 20 continues the process of step S21.

In a case where the reset circuit 20 determines that the link signal indicates the interruption of the USB communication (YES in S21), the reset circuit 20 restarts the WDT function of the reset circuit 20 (S22). After restarting the WDT function of the reset circuit 20, the reset circuit 20 determines whether the WDT has timed out, similarly to step S5 (S23).

In a case where the reset circuit 20 determines that the WDT has timed out (YES in S23), the reset circuit 20 outputs the reset signal to the USB device controller 10 (S26: request signal outputting step), similarly to step S6. At this time, the reset circuit 20 determines that the USB communication is interrupted. After the reset circuit 20 has outputted the reset signal, the process of the reset circuit 20 proceeds to step S21. In a case where the USB device controller 10 detects the reset signal outputted from the reset circuit 20, the USB device controller 10 reboots (rebooting step).

On the other hand, in a case where the reset circuit 20 determines that the WDT has not timed out (NO in S23), the reset circuit 20 determines whether the link signal outputted from the output section 12 indicates the establishment of the USB communication (S24). In a case where the reset circuit 20 determines that the link signal indicates the interruption of the USB communication (NO in S24), the process of the reset circuit 20 proceeds to the process of step S23.

In a case where the reset circuit 20 determines that the link signal indicates the establishment of the USB communication (YES in S24), the reset circuit 20 stops the WDT function of the reset circuit 20 (S25). At this time, the reset circuit 20 determines that the USB communication is established. After the reset circuit 20 has stopped the WDT function of the reset circuit 20, the process of the reset circuit 20 proceeds to the process of step S21.

The reset circuit 20 repeatedly executes a series of processes illustrated in Fig. 4 until the power supply from the PC 2 is stopped. In a case where the power supply from the PC 2 is stopped, the reset circuit 20 ends the process illustrated in Fig. 4.

By the process illustrated in Fig. 3, in a case where the link signal does not indicate the establishment of the USB communication within the timeout time, that is, in a case where the USB communication cannot be established due to, for example, a recognition failure within the timeout time, the reset circuit 20 outputs the reset signal to the USB device controller 10. Thus, when power supply from the PC 2 to the electronic device 1 is started, the reset circuit 20 repeatedly outputs the reset signal at every timeout time, so that the USB communication can be reliably established.

Furthermore, by the process illustrated in Fig. 4, in a case where the USB communication is interrupted after the USB communication has been established, the WDT function of the reset circuit 20 is restarted. Thus, similarly to when the power supply from the PC 2 to the electronic device 1 is started, the reset circuit 20 repeatedly outputs the reset signal at every timeout time, so that the USB communication can be reliably restored.

By the processes of steps S2, S5, and S6, the reset circuit 20 outputs the reset signal in a case where the link signal indicates the interruption of the USB communication as the establishment state. By the processes of steps S21, S22, S23, and S26, the reset circuit 20 outputs the reset signal in a case where the link signal indicates the interruption of the USB communication.

Furthermore, by the processes of steps S2 and S5, the reset circuit 20 determines whether the USB communication is interrupted, on the basis of the link signal (determination step). By the processes of steps S21, S23, and S24, the reset circuit 20 determines whether the USB communication is interrupted, on the basis of the link signal (determination step).

According to the above configuration, in a case where the reset circuit 20 determines that the USB communication is interrupted, on the basis of the link signal indicating the establishment state of the USB communication, the reset circuit 20 outputs the reset signal requesting that the USB device controller 10 reboot. Then, in a case where the USB device controller 10 detects this reset signal, the USB device controller 10 reboots. Thereby, even in a case where a failure occurs in the USB device controller 10, the USB communication can be restored.

Furthermore, since the USB device controller 10 reboots, the USB communication can be restored even in a case where another electronic device is connected to the USB host controller 40, without affecting the other electronic device.

Further, in many cases, the USB device controller 10 is provided with a configuration for detecting an establishment state of USB communication with the USB host controller 40. Employing such a USB device controller 10 makes it possible to repurpose the link signal, thus eliminating the need to separately construct a configuration for determining necessity of rebooting the USB device controller 10. Therefore, a mechanism for restoring the USB communication can be introduced without causing a significant increase in cost.

Here, when the electronic device 1 is connected to the USB host interface 50 and power supply from the PC 2 to the electronic device 1 is started, the USB host controller 40 detects a change in the states of the signal lines. For example, the USB host controller 40 detects the state change of the signal lines D+ and D-.

When the USB host controller 40 detects the state change of the signal lines, the USB host controller 40 transmits a packet to the USB device controller 10. However, for example, in a case where the control section 11 of the electronic device 1 enters an abnormal operation state, or in a case where the USB device controller 10 is in the middle of starting up, the USB device controller 10 no longer responds to this packet. For this reason, the USB host controller 40 stops transmitting packets to the USB device controller 10.

Therefore, a state is brought about that is not even a USB communication error such as a cyclic redundancy check (CRC) error, a packet identifier (PID) error, or a toggle bit error. Thus, on the PC 2 side, since the state is not recognized as a USB communication error, interruption of the USB communication is not recognized, and the USB communication connection cannot be self-restored.

Even in such a case, since the states of the signal lines D+ and D- change due to rebooting of the USB device controller 10, the USB host controller 40 can recognize the electronic device 1. Then, the USB host controller 40 executes the process performed at the time of rebooting the USB device controller 10, thus making it possible to restore the USB communication.

Furthermore, it is unnecessary to provide a circuit for controlling ON/OFF of 5 V of VBUS in the PC 2. Also in the electronic device 1, it is possible to avoid the need for a technique of turning the pull-up of the signal lines D+ and D- on/off to cause the PC 2 to re-recognize the electronic device 1.

Furthermore, the functions of the electronic device 1 can be achieved by inexpensive hardware, such as the USB device controller 10 and the reset circuit 20 described above. This eliminates the need to use intervening software, and thus it is unnecessary to incorporate a special function into an operating system (OS) on the PC 2 side, driver software on the PC 2 side, or firmware on the electronic device 1 side. Therefore, standard software can be used, and a system capable of restoring USB communication can be constructed while providing versatility to the electronic device 1 and the PC 2.

### (Variation 1)

The establishment state of the USB communication indicated by the link signal may be a state where the USB communication is established. In variation 1, the link signal outputted from the output section 12 indicates the establishment of the USB communication as the establishment state. In this case, the output section 12 outputs the link signal to the reset circuit 20 at every second predetermined time while the USB communication is established. Furthermore, the output section 12 does not output the link signal while the USB communication is interrupted. Here, in the WDT function of the reset circuit 20, a fourth predetermined time which is equal to or longer than the second predetermined time needs to be set as the timeout time. That is, the predetermined period in steps S5 and S23 is the fourth predetermined time.

In variation 1, the reset circuit 20 determines whether the link signal has been received from the USB device controller 10, instead of the process of step S2 illustrated in Fig. 3. In a case where the reset circuit 20 determines that the link signal has been received from the USB device controller 10, the reset circuit 20 executes the process of step S3.

On the other hand, in a case where the reset circuit 20 determines that the link signal has not been received from the USB device controller 10, the reset circuit 20 executes the process of step S5. In this case, by steps S5 and S6, the reset circuit 20 outputs the reset signal in a case where the link signal has not been received from the USB device controller 10 within the predetermined period.

Furthermore, in variation 1, the reset circuit 20 determines whether or not the link signal has been received from the USB device controller 10, instead of the process of step S21 illustrated in Fig. 4. In a case where the reset circuit 20 determines that the link signal has been received from the USB device controller 10, the reset circuit 20 continues the determination as to whether or not the link signal has been received. On the other hand, in a case where the reset circuit 20 determines that the link signal has not been received from the USB device controller 10, the reset circuit 20 executes the process of step S22.

Further, in variation 1, the reset circuit 20 determines whether the link signal has been received from the USB device controller 10, instead of the process of step S24 illustrated in Fig. 4. In a case where the reset circuit 20 determines that the link signal has been received from the USB device controller 10, the reset circuit 20 executes the process of step S25.

On the other hand, in a case where the reset circuit 20 determines that the link signal has not been received from the USB device controller 10, the process of the reset circuit 20 proceeds to step S23. Since the above-described processes can be executed by a microcomputer, the reset circuit 20 may be a microcomputer having a WDT function, in variation 1. This makes it possible to make the reset circuit 20 less expensive.

### (Variation 2)

In a case where the USB communication is interrupted, the USB device controller 10 executes a process for restoring the USB communication. Specifically, the USB device controller 10 executes, as the process for restoring the USB communication, a retry process of adding a first predetermined time as a standby time and retrying connection of the USB communication.

Thereby, the USB device controller 10 can execute the process for restoring the USB communication before rebooting. Therefore, in a case where the USB communication can be restored by the USB device controller 10 executing this process, the USB communication can be restored quickly. This will be specifically described below.

The USB host controller 40 transmits a packet to the USB device controller 10, and even if the USB device controller 10 no longer responds to this packet, the USB host controller 40 transmits the packet to the USB device controller 10 a predetermined number of times. In a case where the USB device controller 10 does not respond even after the USB host controller 40 has transmitted the packet the predetermined number of times, the USB host controller 40 stops transmitting the packet.

In a case where the USB device controller 10 can respond to the packet transmitted from the USB host controller 40 by executing the process for restoring the USB communication, the USB communication is restored quickly.

In step S6 or S26, the reset circuit 20 may output the reset signal after the first predetermined time from a time point when the reset circuit 20 has determined that the USB communication is interrupted, on the basis of the link signal. Specifically, the reset circuit 20 may have, for example, a delay circuit (not illustrated) provided between the above-described AND circuit and the timeout output terminal of the reset circuit 20.

The delay circuit outputs a low-level signal to the AND circuit after the first predetermined time from a time point when a low-level signal outputted from the timeout output terminal has been received. The AND circuit outputs a low-level signal as the reset signal to the USB device controller 10.

Furthermore, during a period from the time point when the delay circuit has received the low-level signal from the timeout output terminal until the first predetermined time elapses, the reset circuit 20 determines whether the link signal outputted from the output section 12 indicates the establishment of the USB communication. In a case where the reset circuit 20 determines that the link signal indicates the establishment of the USB communication within the first predetermined time, the process of the reset circuit 20 proceeds from step S5 to step S2, or proceeds from step S23 to step S21. That is, the reset circuit 20 does not output the reset signal.

On the other hand, in a case where the reset circuit 20 determines that the link signal indicates the interruption of the USB communication, the process of the reset circuit 20 proceeds to step S6 or S26. That is, the reset circuit 20 outputs the reset signal after the first predetermined time from the time point when the reset circuit 20 has determined that the USB communication is interrupted in step S5 or S23.

According to the above configuration, in a case where the USB communication is interrupted, the USB device controller 10 executes the process for restoring the USB communication. Then, the reset circuit 20 outputs the reset signal after the first predetermined time from the time point when the reset circuit 20 has determined that the USB communication is interrupted. Thereby, in a case where the USB device controller 10 cannot restore the USB communication within the first predetermined time, the USB device controller 10 can be rebooted.

Furthermore, in a case where the reset circuit 20 determines that the link signal indicates the establishment of the USB communication within the first predetermined time, the reset circuit 20 does not output the reset signal. For this reason, in a case where the USB communication can be established or restored within the first predetermined time, the reset circuit 20 does not output the reset signal. Therefore, the USB communication can be established or restored earlier than in a case where the reset circuit 20 outputs the reset signal.

### Embodiment 2

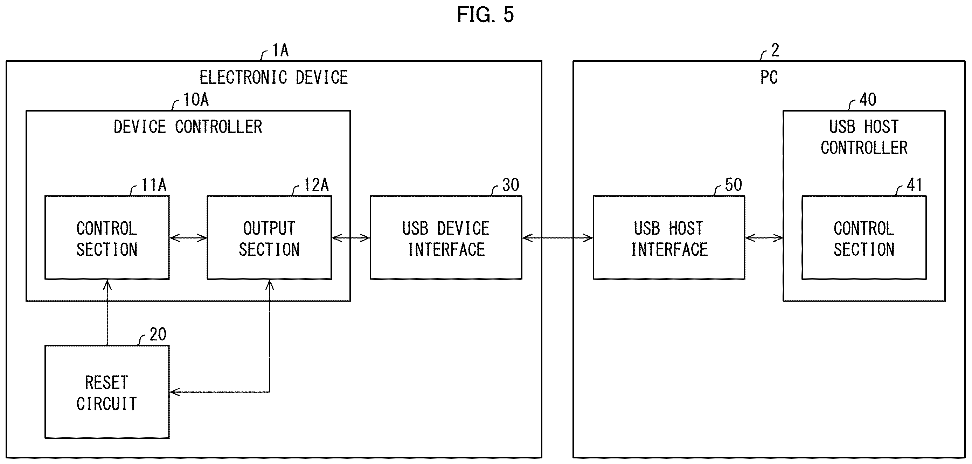

Embodiment 2 of the present invention will be described below. Note that for convenience of description, members having the same functions as the members described in Embodiment 1 are denoted by the same reference numerals, and description thereof will not be repeated. Fig. 5 is a block diagram illustrating an example of configurations of an electronic device 1A and a PC 2 in accordance with Embodiment 2 of the present invention.

The electronic device 1A is a larger-scale device than the electronic device 1. As illustrated in Fig. 5, the electronic device 1A differs from the electronic device 1 in that the electronic device 1A includes a device controller 10A instead of the USB device controller 10. The device controller 10A, which is not limited to one used for USB communication but is also used for other applications, has a control section 11A and an output section 12A.

When transmitting data to the USB host controller 40, the device controller 10A may transmit the data to the output section 12A. In this case, the output section 12A transmits the data received from the device controller 10A, to the USB host controller 40 via the USB device interface 30. Note that in a case where, for example, real-time property is required for control of the electronic device 1A, the device controller 10A may transmit data to the USB host controller 40 via the USB device interface 30 without the intervening output section 12A.

The control section 11A differs from the control section 11 in that the control section 11A does not include an output section. A function of the control section 11A is the same as the function of the control section 11 except that the function of the output section is not included. The control section 11A includes, for example, a processor such as a CPU and a microcomputer dedicated to USB communication. The output section 12A has the function of communicating with the USB host controller 40 in addition to the function of the output section 12. The output section 12A is, for example, a one-chip microcomputer. The reset circuit 20 outputs the reset signal to the control section 11A and the output section 12A.

Aspects of the present invention can also be expressed as follows:
An electronic device in accordance with Aspect 1 of the present invention is an electronic device including: a device controller configured to establish USB communication with a host controller; and a reset circuit configured to output a request signal requesting that the device controller reboot, wherein the device controller outputs a link signal indicating an establishment state of the USB communication, the reset circuit outputs the request signal in a case where the reset circuit determines, on the basis of the link signal, that the USB communication is interrupted, and the device controller reboots in a case where the device controller detects the request signal.

An electronic device in accordance with Aspect 2 of the present invention may be configured, in Aspect 1 above, such that the reset circuit outputs the request signal in a case where the link signal indicates interruption of the USB communication as the establishment state.

An electronic device in accordance with Aspect 3 of the present invention may be configured, in Aspect 1 above, such that the reset circuit outputs the request signal in a case where the reset circuit has not received, from the device controller, the link signal indicating establishment of the USB communication as the establishment state within a predetermined period.

An electronic device in accordance with Aspect 4 of the present invention may be configured, in any one of Aspects 1 to 3 above, such that the device controller executes, in a case where the USB communication is interrupted, a process for restoring the USB communication.

An electronic device in accordance with Aspect 5 of the present invention may be configured, in Aspect 4 above, such that the reset circuit outputs the request signal after a predetermined time from a time point when the reset circuit has determined, on the basis of the link signal, that the USB communication is interrupted.

A restoration method in accordance with Aspect 6 of the present invention is a method for restoring USB communication between a host controller and a device controller, the method including: a link signal outputting step in which the device controller outputs a link signal indicating an establishment state of the USB communication; a determination step of determining, on the basis of the link signal, whether the USB communication is interrupted; a request signal outputting step of, in a case where it is determined in the determination step that the USB communication is interrupted, outputting a request signal requesting that the device controller reboot; and a rebooting step of rebooting the device controller in a case where the device controller detects the request signal.

### (Supplementary note)

The present invention is not limited to the embodiments, but can be altered by a person skilled in the art within the scope of the claims. The present invention also encompasses, in its technical scope, any embodiment derived by combining technical means disclosed in differing embodiments.

### Reference Signs List

- 1, 1A: Electronic device
- 10: USB device controller (device controller)
- 10A: Device controller
- 12, 12A: Output section
- 20: Reset circuit
- 40: USB host controller (host controller)

## Claims

1. An electronic device (1), the electronic device (1) comprising:
a device controller (10) configured to establish universal serial bus, USB, communication with a host controller (40); and
a reset circuit (20) configured to output a request signal requesting that the device controller (10) reboot, wherein:
the device controller (10) is configured to output a link signal indicating an establishment state of the USB communication,
the reset circuit (20) is configured to output the request signal in a case where the reset circuit (20) determines, on the basis of the link signal, that the USB communication is interrupted, and
the device controller (10) is configured to reboot in a case where the device controller (10) detects the request signal.

2. The electronic device (1) according to claim 1, wherein the reset circuit (20) is configured to output the request signal in a case where the link signal indicates interruption of the USB communication as the establishment state.

3. The electronic device (1) according to claim 1 or claim 2, wherein the reset circuit (20) is configured to output the request signal in a case where the reset circuit (20) has not received, from the device controller (10), the link signal indicating establishment of the USB communication as the establishment state within a predetermined period.

4. The electronic device (1) according to any of claims 1 to 3, wherein the device controller (10) is configured to execute, in a case where the USB communication is interrupted, a process for restoring the USB communication.

5. The electronic device (1) according to claim 4, wherein the reset circuit (20) is configured to output the request signal after a predetermined time from a time point when the reset circuit (20) has determined, on the basis of the link signal, that the USB communication is interrupted.

6. A method for restoring universal serial bus, USB, communication between a host controller (40) and a device controller (10), the method comprising:
a link signal outputting step in which the device controller (10) outputs a link signal indicating an establishment state of the USB communication;
a determination step of determining, on the basis of the link signal, whether the USB communication is interrupted;
a request signal outputting step of, in a case where it is determined in the determination step that the USB communication is interrupted, outputting a request signal requesting that the device controller (10) reboot; and
a rebooting step of rebooting the device controller (10) in a case where the device controller (10) detects the request signal.
